# EUROPÄISCHE PATENTSCHRIFT

(11) **EP 4 247 691 B1**
(45) Veröffentlichungstag und Bekanntmachung des Hinweises auf die Patenterteilung: **04.03.2026**
(21) Anmeldenummer: 21820131.7
(22) Anmeldetag: 17.11.2021
(51) Int. Cl.: B62D 25/14, B62D 33/06

(54) **KABINENTEILSTRUKTUR FÜR EINE FAHRERKABINE EINES KRAFTFAHRZEUGS UND VORZUGSWEISE EINES NUTZFAHRZEUGS**
CABIN SUBSTRUCTURE FOR A DRIVER CABIN OF A MOTOR VEHICLE, PREFERABLY A UTILITY VEHICLE
INFRASTRUCTURE DE CABINE POUR UNE CABINE DE CONDUCTEUR D'UN VÉHICULE AUTOMOBILE, DE PRÉFÉRENCE UN VÉHICULE UTILITAIRE

(30) Priorität: 18.11.2020 DE 102020130430
(43) Veröffentlichungstag der Anmeldung: 27.09.2023
(73) Patentinhaber: General Dynamics European Land Systems - Mowag GmbH, 8280 Kreuzlingen (CH)
(72) Erfinder: HALLER, Markus, 8274 Tägerwilen (CH); MERZ, Lukas, 8505 Pfyn (CH)
(74) Vertreter: BSB Patentanwälte Schütte & Engelen Partnerschaft mbB
(86) Internationale Anmeldenummer: PCT/EP2021/082035
(87) Internationale Veröffentlichungsnummer: WO 2022/106490

(56) Entgegenhaltungen:
- EP-A1- 3 617 040
- EP-B1- 0 755 849
- CN-U- 205 010 353
- DE-B1- 2 918 136
- JP-A- H10 100 945

## Beschreibung

Die vorliegende Erfindung betrifft eine Kabinenteilstruktur für eine Fahrerkabine eines Kraftfahrzeugs, vorzugsweise eines Nutzfahrzeugs. Insbesondere betrifft die Erfindung eine Kabinenteilstruktur für eine Fahrerkabine eines Kraftfahrzeugs bzw. eines Nutzfahrzeugs, umfassend wenigstens zwei sich in Fahrzeughochrichtung erstreckende Hochträger und wenigstens eine sich in Fahrzeugquerrichtung erstreckende und mit den Hochträgern verbundene Querträgereinheit, wobei die Querträgereinheit beabstandet zu den oberen und unteren Enden der Hochträger angeordnet ist. Die Erfindung betrifft zudem ein Kraftfahrzeug und vorzugsweise ein Nutzfahrzeug mit einer solchen Kabinenteilstruktur.

An solche Fahrerkabinen werden sehr besondere und üblicherweise auch andere Anforderungen als beispielsweise an die Fahrgastzellen von Pkws gestellt. Beispielsweise befinden sich Fahrer und Beifahrer in einer solchen Kabine besonders weit vorne, damit möglichst viel Nutzraum in der Kabine und/oder hinter der Kabine zur Verfügung steht. Dadurch bedingt ist das Antriebsaggregat in der Regel nicht vor, sondern unterhalb der Kabine angeordnet (sog. Frontlenker; engl. Cab Over Engine bzw. Cab Forward). Daraus ergeben sich besondere Einstiegsbedingungen, da die Insassen entsprechend hoch sitzen und ihre Sitze möglichst gut erreichen müssen.

Zudem soll die Kabine den Insassen ein möglichst hohes Maß an Sicherheit bieten. Dabei sind neben den regelmäßig zu berücksichtigenden Unfallsituationen mit Aufprallereignissen auf andere Fahrzeuge und Hindernisse hierbei auch solche Unfallsituationen zu berücksichtigen, welche durch Fahrten im schweren Gelände bedingt sind. So sollte die Kabine den Insassen beispielsweise auch bei einem Umkippen oder Überschlagen des Fahrzeugs einen möglichst guten Schutz bieten.

Ein weiteres besonderes Anforderungsmerkmal ist, dass in der Kabine ausreichend Raum für ein Cockpit mit vielen Bedienelementen und Anzeigen vorhanden sein muss. Oft ist auch das Anbringen zusätzlicher Benutzerschnittstellen, beispielsweise für Anbaugeräte oder Zusatzausstattungen, notwendig. Zugleich muss genügend Raum für Insassen mit besonderer Ausrüstung und beispielsweise Schutzausrüstung zur Verfügung stehen. An solche Insassen müssen auch die Bedienbarkeit und die Ein- und Ausstiegsmöglichkeiten angepasst werden können. Bei all diesen Anforderungen ist stets auch zu berücksichtigen, dass die Kabine ein möglichst geringes Gewicht aufweist, um die Nutzlast des Fahrzeugs nicht unnötig zu reduzieren.

Aus der EP 0 755 849 B1 ist eine Kabinenteilstruktur für ein Nutzfahrzeug bekannt, bei welcher die Querträgereinheit einen in Fahrzeugvorwärtsfahrtrichtung gekrümmten Frontträger und wenigstens einen stufenförmig entgegen der Fahrzeugvorwärtsfahrtrichtung gebogenen Integralträger umfasst.

Es ist daher die Aufgabe der vorliegenden Erfindung, die Fahrerkabine eines Kraftfahrzeugs, vorzugsweise eines Nutzfahrzeugs, zu verbessern. Vorzugsweise soll die Fahrerkabine den oben diskutierten Anforderungskatalog möglichst weitgehend erfüllen. Zudem soll die Fahrerkabine besonders unaufwendig und wirtschaftlich während und/oder nach der Herstellung an unterschiedliche Anforderungen und Einsatzmöglichkeiten angepasst werden können.

Diese Aufgabe wird durch eine Kabinenteilstruktur mit den Merkmalen des Anspruchs 1 gelöst. Ein erfindungsgemäßes Kraftfahrzeug ist Gegenstand des Anspruchs 15. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Die erfindungsgemäße Kabinenteilstruktur ist für eine Fahrerkabine eines Kraftfahrzeugs und vorzugsweise eines Nutzfahrzeugs vorgesehen. Die Kabinenteilstruktur umfasst wenigstens zwei Hochträger, welche sich in Fahrzeughochrichtung erstrecken. Die Kabinenteilstruktur umfasst wenigstens eine sich in Fahrzeugquerrichtung erstreckende Querträgereinheit. Die Querträgereinheit ist mit den Hochträgern verbunden. Insbesondere verbindet die Querträgereinheit die beiden Hochträger tragend. Die Querträgereinheit ist beabstandet zu den oberen und unteren Enden der Hochträger angeordnet. Insbesondere ist die Querträgereinheit in jeweils einem mittleren Bereich der Hochträger an die Hochträger angebunden. Dabei umfasst die Querträgereinheit wenigstens einen (insbesondere nur einen) Frontträger. Der Frontträger ist in Vorwärtsfahrtrichtung gekrümmt (sodass dieser auch als konvexer Frontträger bezeichnet werden kann). Insbesondere ist der Frontträger in Vorwärtsfahrtrichtung entlang seiner Längsachse gekrümmt. Die Querträgereinheit umfasst wenigstens einen (insbesondere nur einen) Integralträger. Der Integralträger ist entgegen der Vorwärtsfahrtrichtung gekrümmt (sodass dieser auch als konkaver Integralträger bezeichnet werden kann). Insbesondere ist der Integralträger in Vorwärtsfahrtrichtung entlang seiner Längsachse gekrümmt. Dadurch spannen der Frontträger und der Integralträger zwischen sich einen Trägerraum auf. Dabei sind der Frontträger und der Integralträger über wenigstens die Hälfte ihrer Spannweite mit einem gleichen Radius gekrümmt, sodass der aufgespannte Trägerraum eine ellipsenähnliche Querschnittsgeometrie aufweist.

Die erfindungsgemäße Kabinenteilstruktur bietet viele Vorteile. Einen erheblichen Vorteil bietet die Querträgereinheit mit ihrem konvexen Frontträger und ihrem konkaven Integralträger. Dadurch ist die Querträgereinheit besonders stabil und belastbar und benötigt zugleich nur einen sehr geringen Bauraum. Besonders vorteilhaft ist, dass die Querträgereinheit an den Enden bzw. im Bereich der Hochträger aufgrund ihrer Formgebung besonders kompakt ausfällt. Dadurch steht beispielsweise für den Ein- und Ausstiegsbereich sowie auch im Fuß- und Arbeitsbereich in der Kabine besonders viel Nutzraum bereit.

Des weiteren wird eine gezielt aussteifende Verbindung zwischen den Hochträgern gewährleistet und zugleich kann das Gewicht der Kabinenteilstruktur erheblich reduziert werden. Ein Vorteil ist auch, dass die Querträgereinheit mit dem Trägerraum eine Sicherheitszone bereitstellt, welche bei Unfallereignissen gezielt geknautscht werden kann. Zudem können im Trägerraum Fahrzeugkomponenten untergebracht werden. Insgesamt ermöglicht die Erfindung eine konstruktiv unaufwendige und besonders wirtschaftlich umsetzbare Möglichkeit zur Verwirklichung eines Fahrzeugs, welches die zuvor beschriebenen Anforderungen besonders gut erfüllt.

Erfindungsgemäß sind der Frontträger und der Integralträger mit einem gleichen Radius gekrümmt. Dadurch weist der aufgespannte Trägerraum eine ellipsenähnliche Querschnittsgeometrie auf. Die Querschnittsgeometrie bezieht sich insbesondere auf einen Querschnitt durch eine Ebene, welche sich horizontal bzw. in Fahrzeuglängsrichtung und in Fahrzeugquerrichtung erstreckt. Eine solche Ausführung ist besonders stabil bzw. belastbar und benötigt an solchen Stellen besonders wenig Bauraum, wo Nutzraum für die Insassen während des Fahrens und beim Ein- und Aussteigen zur Verfügung stehen muss. Der Frontträger und der Integralträger sind insbesondere jeweils kreisbogenförmig ausgebildet. Der Radius bezieht sich insbesondere auf den Kreisbogen.

Der Frontträger und/oder der Integralträger sind insbesondere über ihre gesamte Spannweite (insbesondere von dem einen bis zum anderen Hochträger) gekrümmt und vorzugsweise in dem gleichen Radius gekrümmt. Erfindungsgemäß bleibt der Radius über wenigstens die Hälfte und vorzugsweise wenigstens zwei Drittel und besonders bevorzugt über wenigstens 90% der Spannweite oder auch über die gesamte Spannweite gleich. Es ist möglich, dass der Frontträger und/oder der Integralträger an einem Endbereich einen angepassten Radius und/oder einen linearen Verlauf aufweisen. Dadurch wird beispielsweise eine Möglichkeit zur Anbindung an die Hochträger bereitgestellt. Zur optimalen Ausnutzung des zur Verfügung stehenden Bauraums kann vorgesehen sein, dass sich der Frontträger und der Integralträger um bis zu +/- 15 % in ihrem Radius unterscheiden.

Insbesondere sind der Frontträger und der Integralträger im mittleren Bereich ihrer Längsausdehnung maximal beabstandet. Insbesondere sind der Frontträger und der Integralträger im endständigen Bereich ihrer Längsausdehnung minimal oder gar nicht beabstandet. Der Frontträger und der Integralträger können sich an ihren Enden berühren.

Es ist bevorzugt und vorteilhaft, dass der Frontträger und der Integralträger wenigstens abschnittsweise auf einer (in Bezug auf die Fahrzeughochrichtung) gleichen Höhe angeordnet sind. So kann ein besonders hohes Maß an Stabilität und Sicherheit bei besonders geringem Bauraumbedarf erzielt werden. Insbesondere liegen die in Längsrichtung verlaufenden Mittellinien von Frontträger und Integralträger jeweils auf der gleichen Höhe. Die Mittellinien können auch einen gezielten Versatz zueinander aufweisen. Das ist zum Beispiel dann vorgesehen, wenn die beiden Träger eine unterschiedliche Höhe aufweisen, um eine bündige Ausrichtung zu ermöglichen. Insbesondere sind der Frontträger und der Integralträger in Bezug auf ihre Oberseite und/oder Unterseite wenigstens abschnittsweise bündig zueinander ausgerichtet. Der Frontträger und der Integralträger können in Bezug auf ihre Oberseite und/oder Unterseite wenigstens abschnittsweise einen Versatz aufweisen.

In spezifischen Ausgestaltungen ist es von Vorteil, dass der Frontträger und der Integralträger vollständig in unterschiedlichen Höhen angeordnet sind bzw. nicht in der Höhe überlappend angeordnet sind. In solchen Ausgestaltungen ist der Integralträger vorzugsweise nicht mehr als das 1,5 fache oder das Zweifache seiner Höhe unterhalb oder oberhalb des Frontträgers angeordnet.

In einer besonders bevorzugten und vorteilhaften Weiterbildung umfasst die Querträgereinheit wenigstens eine Schieneneinrichtung zur beweglichen Aufnahme von wenigstens einer Benutzerschnittstelle und beispielsweise von Bedieneinrichtungen und/oder Anzeigeeinrichtungen. Insbesondere ist die aufgenommene Benutzerschnittstelle dabei von der Kabine aus bedienbar bzw. einsehbar. Dabei umfasst die Schieneneinrichtung vorzugsweise wenigstens eine sich in Fahrzeugquerrichtung erstreckende und an dem Integralträger befestigte bzw. befestigbare Aufnahmeschiene zur Aufnahme von Trägerschlitten. Die Aufnahmeschiene umfasst insbesondere wenigstens eine Profilschiene oder ist als eine solche ausgebildet. Insbesondere ist auch die Aufnahmeschiene kreisbogenförmig und vorzugsweise mit dem gleichen Radius wie der Integralträger ausgebildet. Insbesondere sind die Trägerschlitten lösbar und vorzugsweise werkzeuglos lösbar an der Aufnahmeschiene angebunden. Durch seine besondere Geometrie und Anordnung kann der Integralträger besonders vorteilhaft zur Befestigung der Aufnahmeschiene dienen.

Die Schieneneinrichtung umfasst wenigstens einen Trägerschlitten und vorzugsweise eine Mehrzahl von Trägerschlitten. Die Trägerschlitten gleiten insbesondere in bzw. an der Aufnahmeschiene. An dem Trägerschlitten ist insbesondere wenigstens eine Benutzerschnittstelle befestigbar und vorzugsweise lösbar befestigbar und besonders bevorzugt werkzeuglos lösbar befestigbar. Der Trägerschlitten ist wenigstens in Längsrichtung der Aufnahmeschiene entlang der Aufnahmeschiene verschiebbar. Der Trägerschlitten kann fixierbar sein, um ein unbeabsichtigtes Verschieben zu verhindern.

Die Schieneneinrichtung umfasst insbesondere wenigstens zwei Aufnahmeschienen. Die Aufnahmeschienen können parallel zueinander und insbesondere auch übereinander angeordnet sein. Die Aufnahmeschienen können gemeinsame Trägerschlitten umfassen oder auch separate Trägerschlitten aufweisen. Die Aufnahmeschiene ist vorzugsweise wenigstens zweispurig oder auch mehrspurig ausgebildet. Möglich ist auch eine einspurige Aufnahmeschiene.

Es ist besonders bevorzugt und vorteilhaft, dass die wenigstens eine Aufnahmeschiene der Krümmung des Integralträgers wenigstens abschnittsweise folgt. Insbesondere folgt die Aufnahmeschiene der Krümmung des Integralträgers zu wenigstens einem überwiegenden Teil ihrer Länge und beispielsweise vollständig.

Vorzugsweise umfasst die Schieneneinrichtung wenigstens eine Kontaktschiene. Mittels der Kontaktschiene ist eine an der Schieneneinrichtung aufgenommene Benutzerschnittstelle insbesondere elektrisch kontaktierbar. Insbesondere ist die Kontaktschiene für eine Energieversorgung und/oder Datenübertragung ausgebildet. Es ist möglich, dass die Kontaktschiene separat zur Aufnahmeschiene ausgebildet ist. Möglich ist auch, dass die Kontaktschiene durch die Aufnahmeschiene bereitgestellt wird bzw. in diese integriert wird.

Die Kontaktierung der Benutzerschnittstelle mit der Kontaktschiene kann direkt oder auch mittelbar ausgeführt sein. Beispielsweise erfolgt die Kontaktierung über den wenigstens einen Trägerschlitten. Insbesondere ist die Benutzerschnittstelle mit dem Trägerschlitten kontaktiert, beispielsweise mittels einer Steckverbindung. Insbesondere ist der Trägerschlitten mit der Kontaktschiene kontaktiert.

Die zuvor beschriebenen Ausgestaltungen ermöglichen ein besonders zügiges und komfortables Anbringen bzw. Entfernen von Benutzerschnittstellen und z. B. Displays und Bedienpanels. Besonders vorteilhaft ist das beispielsweise dann, wenn häufig Anbaugeräte mit eigenen komplexen Bedienteilen gewechselt und optimal erreichbar in der Kabine ausgerichtet werden müssen.

Vorzugsweise weist die Schieneneinrichtung wenigstens einen Wechselabschnitt auf. Dabei ist innerhalb des Wechselabschnitts der Trägerschlitten in die Aufnahmeschiene einsetzbar und/oder aus der Aufnahmeschiene auslösbar. Vorzugsweise ist der Wechselabschnitt an wenigstens einem Endbereich der Aufnahmeschiene angeordnet. Insbesondere ist an beiden Endbereichen der Aufnahmeschiene jeweils ein Wechselabschnitt vorgesehen. Das ermöglicht ein besonders komfortables und zügiges Austauschen von Benutzerschnittstellen. Insbesondere ist außerhalb des wenigstens einen Wechselabschnitts der Trägerschlitten nicht von der Aufnahmeschiene lösbar. So wird ein unerwünschtes Ablösen zuverlässig vermieden.

Es ist möglich und vorteilhaft, dass der wenigstens eine Wechselabschnitt mittels eines Verschlussbauteils abdeckbar ist bzw. abgedeckt ist. Insbesondere umfasst die Schieneneinrichtung wenigstens ein Verschlussbauteil. Insbesondere ist mittels des Verschlussbauteils ein unbeabsichtigtes Einschieben des Trägerschlittens in den Wechselabschnitt (formschlüssig) blockierbar. Das Verschlussbauteil ist insbesondere als ein Verkleidungsbauteil ausgebildet. Insbesondere ist das Verschlussbauteil werkzeuglos entnehmbar.

In einer vorteilhaften Weiterbildung umfasst die Kabinenteilstruktur wenigstens eine Zusatzschieneneinrichtung. Die Zusatzschieneneinrichtung umfasst wenigstens eine sich in Fahrzeugquerrichtung erstreckende und insbesondere wenigstens teilweise oberhalb des Trägerraums angeordnete Zusatzaufnahmeschiene zur Aufnahme von Trägerschlitten. Insbesondere ist die Zusatzaufnahmeschiene an dem Integralträger befestigbar bzw. befestigt. Insbesondere ist die Zusatzschieneneinrichtung in ihrer Konstruktion wenigstens teilweise wie die zuvor beschriebene Schieneneinrichtung ausgebildet. Insbesondere ist die Zusatzaufnahmeschiene oberhalb der Aufnahmeschiene der Schieneneinrichtung angeordnet. So können beispielsweise auf einer oberen Cockpitfläche weitere Benutzerschnittstellen einfach und zügig angebracht und ausgerichtet werden.

Der Integralträger ist vorzugsweise lösbar und besonders bevorzugt zerstörungsfrei lösbar mit den Hochträgern und/oder mit dem Frontträger verbunden und vorzugsweise verschraubt. Insbesondere ist der Integralträger durch Verschraubungsmittel an den Hochträgern und/oder an dem Frontträger befestigt. Insbesondere ist der Integralträger an seinen Enden derart befestigt. Dadurch kann der Integralträger besonders einfach zusammen mit den daran angebundenen Komponenten ausgetauscht oder bei bereits bestehenden bzw. entwickelten Fahrerkabinen ergänzt werden.

Es ist möglich und vorteilhaft, dass der Integralträger und der Frontträger abschnittsweise (als eine tragende Struktur) miteinander verbunden sind. Insbesondere ist dazu eine punktuelle Verbindungsstruktur vorgesehen. Insbesondere ist die Verbindungsstruktur lösbar und besonders bevorzugt zerstörungsfrei lösbar ausgebildet. Beispielsweise umfasst die Verbindungsstruktur Verschraubungsmittel. Es ist möglich, dass sich die Verbindungsstruktur wenigstens teilweise in den Trägerraum und/oder durch den Trägerraum erstreckt. Beispielsweise sind der Integralträger und der Frontträger kreisbogenförmig ausgebildet und punktuell zu einer tragenden Struktur verbunden.

Die Kabinenteilstruktur umfasst vorzugsweise wenigstens ein vormontierbares (bzw. vormontiertes) Modul. Dabei ist das Modul in eine bereits bestehende Rohbaustruktur der Fahrerkabine montierbar und vorzugsweise als nur ein einziges zu handhabendes Teil montierbar. Insbesondere umfasst das Modul wenigstens den Integralträger und die Schieneneinrichtung, sodass zu deren Befestigung (nur) der Integralträger mit der Rohbaustruktur verbunden werden muss. Insbesondere ist auch die Zusatzschieneneinrichtung an dem Modul vormontierbar. Besonders bevorzugt sind auch die nachfolgend beschriebene Anbindungseinrichtung für die Lenksäule und/oder die Instrumententafel und/oder die Cockpitverkleidung und/oder die Belüftungseinheiten und/oder weitere Cockpitbauteile an dem Modul vormontierbar. Durch seine erfindungsgemäßen Eigenschaften eignet sich der Integralträger besonders vorteilhaft als tragende Basis für ein solches Modul.

Der Frontträger ist vorzugsweise fest und insbesondere nicht zerstörungsfrei lösbar mit den Hochträgern verbunden und insbesondere verschweißt. Möglich sind auch andere geeignete insbesondere stoffschlüssige und/oder nicht zerstörungsfrei lösbare Fügeverfahren. Insbesondere ist der Frontträger an seinen Enden derartig mit den Hochträgern verbunden. Insbesondere bildet der Frontträger einen festen Bestandteil einer Rohbaustruktur der Fahrerkabine. Es kann vorgesehen sein, dass der Frontträger lösbar mit dem Integralträger verbunden ist.

In vorteilhaften Ausgestaltungen ist es möglich, dass sich zwischen dem Frontträger und dem Integralträger wenigstens ein Versteifungselement erstreckt. Insbesondere erstreckt sich das Versteifungselement quer zur Längsachse der Querträgereinheit und/oder quer zur Fahrzeugquerrichtung. Dadurch kann die Wirkung der ellipsenähnlichen Querträgereinheit und des Trägerraums auf die Stabilität und Sicherheit der Fahrerkabine noch weiter verbessert werden. Insbesondere sind wenigstens zwei oder mehr Versteifungselemente vorgesehen. Vorzugsweise ist das Versteifungselement lösbar und besonders bevorzugt zerstörungsfrei lösbar am Frontträger und/oder Integralträger befestigt, beispielsweise durch Verschraubungsmittel.

Es ist möglich und vorteilhaft, dass der Integralträger und/oder der Frontträger durch jeweils ein und vorzugsweise durch jeweils nur ein Hohlprofilbauteil bereitgestellt werden. Der Integralträger und/oder der Frontträger können auch wenigstens ein Hohlprofilbauteil umfassen. Das Hohlprofilbauteil des Integralträgers umfasst insbesondere an den Enden jeweils eine Flanscheinheit zur lösbaren Anbindung an die Hochträger. Möglich sind auch andere geeignete Trägerausführungen.

Der Integralträger kann wenigstens eine Anbindungseinrichtung für eine Lenksäule aufweisen. Der Integralträger eignet sich aufgrund seiner Konstruktion und Position besonders vorteilhaft zur Anbindung der Lenksäule. Es ist bevorzugt, dass der Integralträger wenigstens zwei Anbindungseinrichtungen aufweist, umfassend eine Anbindungseinrichtung für eine Ausführung des Fahrzeugs als Linkslenker und eine weitere Anbindungseinrichtung für eine Ausführung des Fahrzeugs als Rechtslenker. Die Anbindungseinrichtung dient insbesondere zur Aufnahme eines Lenksäulenlagers oder kann wenigstens ein Lenksäulenlager umfassen. Die Anbindungseinrichtung kann einstückig mit dem Integralträger ausgebildet sein. Möglich ist auch eine separate und insbesondere von dem Integralträger lösbare Anbindungseinrichtung. Insbesondere ist an dem Integralträger eine Lenksäule befestigbar.

In einer besonders bevorzugten und vorteilhaften Ausgestaltung stellt der Integralträger wenigstens einen Cockpitkomponententräger bereit. Insbesondere ist der Integralträger zugleich auch ein Cockpitkomponententräger. Dazu ist an dem Integralträger wenigstens eine Instrumententafel für ein Cockpit der Fahrerkabine und/oder wenigstens eine Cockpitverkleidung und/oder wenigstens eine Belüftungseinheit für eine Klimatisierungsanlage (direkt und/oder mittelbar) befestigbar bzw. befestigt. Insbesondere folgt die Instrumententafel und/oder die Cockpitverkleidung wenigstens abschnittsweise der Krümmung des Integralträgers. Das ermöglicht aufgrund der konkaven Krümmung eine sehr große Bewegungsfreiheit an den Einstiegsbereichen.

Die Karosserieteilstruktur kann wenigstens eine Instrumententafel und/oder Cockpitverkleidung und/oder wenigstens eine Belüftungseinheit für eine Klimatisierungsanlage umfassen. Die Instrumententafel umfasst insbesondere Anzeigeelemente und Bedienteile des Cockpits. Die Instrumententafel kann wenigstens teilweise in die Cockpitverkleidung integriert sein oder separat zu dieser ausgeführt sein. In der Cockpitverkleidung ist insbesondere wenigstens ein Zündschloss bzw. Startknopf angeordnet. Insbesondere sind in der Cockpitverkleidung Belüftungseinheiten für eine Klimatisierungsanlage der Fahrerkabine angeordnet. Insbesondere ist die Instrumententafel unabhängig von der Schieneneinrichtung an dem Integralträger befestigt.

Der Frontträger umfasst vorzugsweise wenigstens eine Scheibenrahmenstruktur zur Befestigung einer Windschutzscheibe. Die Scheibenrahmenstruktur kann einstückig mit dem Frontträger ausgebildet sein bzw. in diesen integriert sein. Die Scheibenrahmenstruktur kann auch separat zum Frontträger ausgebildet sein. Die Scheibenrahmenstruktur kann als ein unterer Scheibenrahmen und/oder als Windlaufleiste und/oder Wasserkasten ausgebildet sein oder wenigstens eine bzw. einen solchen umfassen. Insbesondere ist die Windschutzscheibe an dem Frontträger verklebt und/oder mittels wenigstens eines Keders befestigt. Insbesondere weist die Scheibenrahmenstruktur und/oder die Windschutzscheibe eine an die Krümmung des Frontträgers angepasste Krümmung auf. Insbesondere sind die Krümmungen (im Wesentlichen) gleich ausgebildet.

In allen Ausgestaltungen ist es besonders bevorzugt, dass die Hochträger jeweils als eine A-Säule ausgebildet sind oder Teil einer solchen sind. Durch die Anbindung an A-Säulen bietet die Querträgereinheit besonders viele Vorteile.

Insbesondere sind die Hochträger jeweils an einem oberen Endbereich mit einem Dachquerträger und/oder Dachlängsträger (wenigstens mittelbar) verbunden. Insbesondere sind die Hochträger jeweils an einem unteren Endbereich mit einem Basisquerträger und/oder Basislängsträger (wenigstens mittelbar) verbunden. Die Dachquerträger und/oder Dachlängsträger sind insbesondere Teil eines Dachrahmens einer Rohbaustruktur der Fahrerkabine. Der Basisquerträger und/oder der Basislängsträger sind insbesondere zur Anbindung eines Kabinenbodens der Rohbaustruktur vorgesehen. Der Basisquerträger und/oder der Basislängsträger verlaufen insbesondere im Wesentlichen auf Höhe eines Kabinenbodens. Insbesondere sind der Basisquerträger und der Frontträger wenigstens abschnittsweise übereinander angeordnet. Insbesondere stellt die Karosserieteilstruktur wenigstens einen Teil der Rohbaustruktur bereit. Die Karosserieteilstruktur kann auch die Rohbaustruktur umfassen. Die Querträgereinheit ist insbesondere an der Rohbaustruktur befestigt. Insbesondere ist der Frontträger ein integraler Bestandteil der Rohbaustruktur.

Vorzugsweise ist die Querträgereinheit zwischen dem wenigstens einen Dachquerträger und dem wenigstens einen Basisquerträger angeordnet. Insbesondere verläuft die Querträgereinheit oberhalb des Basisquerträgers und unterhalb des Dachquerträgers. Insbesondere ist die Querträgereinheit, vorzugsweise wenigstens der Integralträger oder der Frontträger, wenigstens teilweise unterhalb einer Windschutzscheibe und vorzugsweise unterhalb eines Windlaufs angeordnet. Insbesondere erstreckt sich die Windschutzscheibe zwischen der Querträgereinheit und dem Dachquerträger und den beiden Hochträgern.

In einer bevorzugten und vorteilhaften Weiterbildung umfasst die Karosserieteilstruktur wenigstens eine Schottwand. Die Schottwand ist vorzugsweise an dem Frontträger und/oder an dem Basisquerträger und/oder an den Hochträgern befestigt und vorzugsweise lösbar und besonders bevorzugt zerstörungsfrei lösbar daran befestigt. Insbesondere sind zur Befestigung Verschraubungsmittel vorgesehen. Dadurch ist ein unkomplizierter Austausch der Schottwand z. B. im Rahmen von Modifizierungen oder Reparaturen möglich. Die Schottwand kann auch fest verbunden und z. B. verschweißt sein.

Vorzugsweise sind die Schottwand und der Frontträger und der Basisquerträger und die Hochträger zu einem gemeinsamen Schubfeld miteinander verbunden. Vorzugsweise folgt die Schottwand einem gekrümmten Verlauf des Frontträgers. Die Schottwand verläuft insbesondere ebenfalls konvex. Insbesondere ist die Schottwand kreisbogenförmig und vorzugsweise mit dem gleichen Radius wie der Fronträger ausgebildet. Insbesondere ist auch der Basisquerträger mit dem gleichen Radius wie der Fronträger gekrümmt. In Kombination mit den zuvor und nachfolgend beschriebenen Weiterbildungen für die Schottwand bietet die Querträgereinheit besonders viele Vorteile.

Die Schottwand ist vorzugsweise an einer in Vorwärtsfahrtrichtung weisenden Frontseite des Frontträgers angeordnet. Insbesondere ist die Schottwand auch an einer in Vorwärtsfahrtrichtung weisenden Frontseite des Basisquerträgers und/oder der Hochträger angeordnet. Dadurch ergeben sich besondere Vorteile für die Sicherheit und Steifigkeit der Fahrerkabine. Möglich ist aber auch, dass die Schottwand an einer in Rückwärtsfahrtrichtung weisenden Rückseite und/oder an einer zur Fahrzeuglängsachse weisenden Stirnseite des Frontträgers und/oder des Basisquerträgers und/oder der Hochträger angeordnet ist.

Vorzugsweise erstreckt sich die Schottwand nur über einen unteren Abschnitt der Frontseite des Frontträgers. Insbesondere ist an einem oberen Abschnitt der Frontseite des Frontträgers die Scheibenrahmenstruktur zur Befestigung einer Windschutzscheibe angeordnet.

Die Schottwand erstreckt sich insbesondere quer zu einer Ebene, welche horizontal bzw. in Fahrzeuglängsrichtung und in Fahrzeugquerrichtung verläuft. Die Schottwand erstreckt sich insbesondere in einer Ebene, welche im Wesentlichen vertikal bzw. in Fahrzeughochrichtung und in Fahrzeugquerrichtung verläuft. Insbesondere ist die Schottwand in Vorwärtsfahrtrichtung vor dem Integralträger angeordnet. Insbesondere ist die Schottwand zwischen einem Innenraum bzw. Fußraum und einer Vorbaubeplankung der Fahrerkabine angeordnet. Die Schottwand kann auch als Stirnwand oder Spritzwand bezeichnet werden. Die Schottwand kann Erhebungen und/oder Ausnehmungen aufweisen, in bzw. durch welche sich Fahrzeugkomponenten erstrecken. Die Schottwand kann wenigstens eine (weitere) Anbindungseinrichtung für die Lenksäule aufweisen. An der Schottwand können eine Pedalerie und/oder andere Fahrzeugkomponenten (z. B. Heizgeräte) befestigt sein.

Es ist möglich, dass die Schottwand wenigstens eine Metallschaum-Verbundplatte umfasst oder durch eine solche bereitgestellt wird. Die Metallschaum-Verbundplatte umfasst insbesondere wenigstens einen Kern aus Metallschaum und vorzugsweise Aluminiumschaum. Der Kern wird insbesondere durch Erwärmung des Metallwerkstoffs unterhalb seiner Schmelztemperatur (insbesondere durch Sintern) hergestellt. Insbesondere ist der Kern zwischen wenigstens zwei blechartigen bzw. blasenfreien Decklagen angeordnet. Insbesondere sind der Kern und die Decklagen einstückig miteinander verbunden. Das ermöglicht eine besonders belastbare und zugleich gewichtsoptimierte Schottwand. Die Schottwand kann als Sicherheitsschottwand zum Schutz des Fahrzeugs bzw. der Insassen vor Explosionen bzw. ballistischen Einwirkungen oder dergleichen ausgebildet sein.

Das erfindungsgemäße Kraftfahrzeug ist insbesondere ein Nutzfahrzeug und umfasst wenigstens eine Fahrerkabine. Dabei umfasst die Fahrerkabine eine Kabinenteilstruktur, wie sie zuvor beschrieben wurde.

Auch das erfindungsgemäße Kraftfahrzeug löst die zuvor gestellte Aufgabe besonders vorteilhaft. Die Fahrerkabine ist insbesondere an einem Fahrgestell des Kraftfahrzeugs montiert. Insbesondere umfasst das Kraftfahrzeug wenigstens ein Fahrgestell. Insbesondere umfasst das Kraftfahrzeug auch die im Rahmen der erfindungsgemäßen Karosserieteilstruktur beschriebenen Fahrzeugkomponenten. Im Trägerraum ist insbesondere wenigstens eine Fahrzeugkomponente und/oder wenigstens eine Knautschzone angeordnet.

Insbesondere ist die Fahrerkabine (bzw. Kabine) für ein Kraftfahrzeug vorgesehen, welches ein Fahrgestell (auch als Chassis bezeichnet) aufweist, welches als Tragstruktur für die Fahrerkabine dient. Insbesondere ist die Fahrerkabine an einem Fahrgestell und beispielsweise an einem Rahmen des Fahrgestells aufnehmbar. Insbesondere ist die Kabine nichttragend ausgebildet. Insbesondere ist die Fahrerkabine keine selbsttragende Karosserie.

Die Fahrerkabine kann als sogenannte Doppelkabine ausgebildet sein. Eine solche Doppelkabine umfasst insbesondere wenigstens eine zweite Sitzreihe im Fond und/oder wenigstens eine weitere Einstiegsmöglichkeit (insbesondere mit wenigstens einer und vorzugsweise mit zwei gegenüberliegenden Türen) im Fond. Zwischen dem Fahrersitz und Beifahrersitz kann wenigstens ein weiterer Sitz bzw. mittlerer Sitz angeordnet sein. Insbesondere ist ein Durchgang zum Fond vorgesehen. Dann ist zwischen dem Fahrersitz und Beifahrersitz insbesondere ein Raum für den Durchgang vorgesehen und insbesondere kein Sitz angeordnet. Vorzugsweise ist dann in einer Rückwandstruktur der Fahrerkabine ein bis zu einem Kabinenboden freier Mittelteil ausgebildet.

Es kann auch eine (Einzel-) Fahrerkabine mit insbesondere nur einer Sitzreihe vorgesehen sein. Insbesondere sind dann der Fahrersitz und wenigstens ein Beifahrersitz einreihig angeordnet. Dahinter erstreckt sich dann insbesondere eine Rückwandstruktur. In allen Ausgestaltungen ist es möglich, dass in einer Rückwandstruktur der Fahrerkabine ein Durchgang zu einem hinter der Fahrerkabine liegenden Nutzraumbereich angeordnet ist. Die Fahrerkabine kann als Hochdachkabine ausgeführt sein.

Insbesondere weist die Querträgereinheit eine Querschnittsgeometrie auf, welche der Querschnittsgeometrie des Trägerraums geometrisch wenigstens näherungsweise entspricht. Unter einer ellipsenähnlichen Querschnittsgeometrie wird erfindungsgemäß eine wenigstens näherungsweise elliptisch ausgebildete Querschnittsgeometrie und beispielsweise eine linsenförmige bzw. näherungsweise elliptische Querschnittsgeometrie verstanden. Die Querschnittsgeometrie ist insbesondere wenigstens näherungsweise elliptisch und vorzugsweise linsenförmig ausgebildet. Die Querschnittsgeometrie kann die Form einer in ihre Längsrichtung gestreckten Ellipse aufweisen (mit oder ohne spitz zulaufende Endbereiche). Die Querschnittsgeometrie kann die Flächenform eines sphärischen Zweiecks aufweisen.

Insbesondere begrenzen der Frontträger und der Integralträger den Trägerraum nur in Fahrzeuglängsrichtung und in Fahrzeugquerrichtung. Insbesondere wird der Trägerraum in Fahrzeughochrichtung nicht durch den Frontträger und den Integralträger begrenzt. Insbesondere ist ein Abstand zwischen dem Frontträger und dem Integralträger in einem mittleren Bereich der Querträgereinheit größer als in einem endständigen Bereich der Querträgereinheit. Insbesondere nimmt ein Abstand zwischen dem Frontträger und dem Integralträger ausgehend von einem in Längsrichtung liegenden Ende der Querträgereinheit zunächst (kontinuierlich) zu und nimmt dann bis zum anderen in Längsrichtung liegenden Ende der Querträgereinheit wieder (kontinuierlich) ab.

Insbesondere verläuft die Krümmung des Frontträgers entlang seiner Längsachse. Insbesondere verläuft die Krümmung des Integralträgers entlang seiner Längsachse. Die Längsachse des Frontträgers und/oder die Längsachse des Integralträgers verläuft insbesondere in einer Ebene, welche sich in Fahrzeugquerrichtung und in Fahrzeuglängsrichtung erstreckt. Die Angaben zur Krümmung von Frontträger und Integralträger beziehen sich im Rahmen der vorliegenden Erfindung insbesondere auf eine Krümmung entlang der Längsachse von Frontträger und Integralträger. Insbesondere geht es dabei um die Krümmungen zur Bereitstellung des Trägerraums. Daneben ist es möglich, dass der Frontträger und/oder der Integralträger noch zusätzlich gebogen oder abgekantet sind, beispielsweise weil sie im Querschnitt als Hohlprofil oder offenes Profil ausgebildet sind.

Insbesondere ist der Frontträger weiter im Inneren der Fahrerkabine angeordnet als die Schottwand und/oder die Windschutzscheibe. Insbesondere ragt der Frontträger nicht über die Schottwand und/oder die Windschutzscheibe hinaus. Insbesondere liegt der Trägerraum vollständig hinter einer von der Schottwand und/oder der Windschutzscheibe begrenzten Ebene im Inneren der Fahrerkabine. Insbesondere ist die Fahrerkabine als eine sogenannte Frontlenkerkabine ausgebildet und weist vorzugsweise keine nach vorne über stehende "Schnauze" oder Haube auf. Insbesondere verläuft der Integralträger zu wenigstens drei Vierteln seiner Länge und vorzugsweise vollständig hinter einer zwischen den Hochträgern aufgespannten Ebene.

Weitere Vorteile und Merkmale der vorliegenden Erfindung ergeben sich aus der Beschreibung der Ausführungsbeispiele, die im Folgenden mit Bezug auf die beiliegenden Figuren erläutert werden.

In den Figuren zeigen:
- Figur 1: eine rein schematische Darstellung eines Nutzfahrzeugs mit einer erfindungsgemäßen Kabinenteilstruktur in einer Seitenansicht;
- Figur 2: eine rein schematische Darstellung eines anderen Nutzfahrzeugs mit einer erfindungsgemäßen Kabinenteilstruktur in einer Seitenansicht;
- Figur 3: eine rein schematische Darstellung einer erfindungsgemäßen Kabinenteilstruktur in einer perspektivischen Ansicht von schräg oben vorne;
- Figur 4: eine Detaildarstellung der Kabinenteilstruktur nach Fig. 3;
- Figur 4a: eine Weiterbildung der Kabinenteilstruktur nach Fig. 3;
- Figur 5: eine rein schematische Darstellung einer Fahrzeugkabine mit einer erfindungsgemäßen Kabinenteilstruktur in einer geschnittenen Seitenansicht;
- Figur 6: eine stark schematisierte Fahrzeugkabine mit einer erfindungsgemäßen Kabinenteilstruktur in einer perspektivischen Innenansicht; und
- Figur 7: die Fahrzeugkabine nach Fig. 6 in einer perspektivischen Innenansicht aus einer anderen Perspektive.

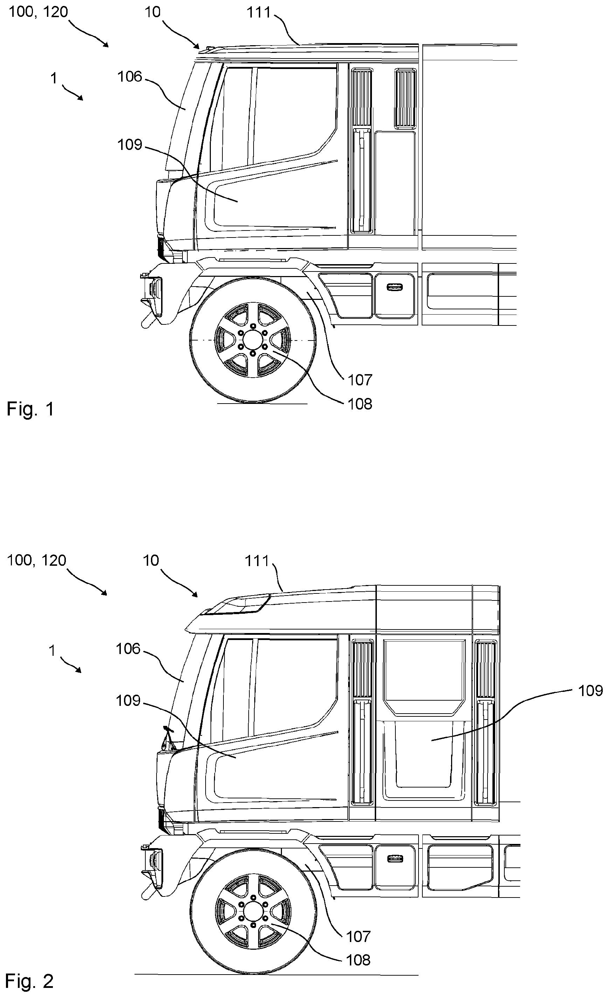

Die Figur 1 zeigt ausschnittsweise ein als Nutzfahrzeug 120 ausgebildetes Kraftfahrzeug 100 mit einer Fahrerkabine 10 mit einer erfindungsgemäßen Kabinenteilstruktur **1.** Die Kabinenteilstruktur 1 ist hier nicht sichtbar im Inneren der Fahrerkabine 10 untergebracht. Die Fahrerkabine 10 ist hier auf ein Fahrgestell 107 aufgesetzt und gefedert sowie gedämpft an diesem gelagert. Das Fahrgestell 107 umfasst hier vier angetriebene Räder 108. Die Fahrerkabine 10 ist unter anderem mit einem Dach 111 und einer Windschutzscheibe 106 sowie jeweils einer Tür 109 für Fahrer und Beifahrer ausgestattet.

Die Figur 2 zeigt eine Weiterbildung der zuvor beschriebenen Fahrerkabine 10 als Doppelkabine mit einem als Hochdach ausgebildeten Dach 111. Durch die Ausführung als Doppelkabine können im Fond hinter dem Fahrer und Beifahrer weitere Insassen Platz nehmen. Für diese Plätze sind hier zusätzliche Türen 109 vorgesehen.

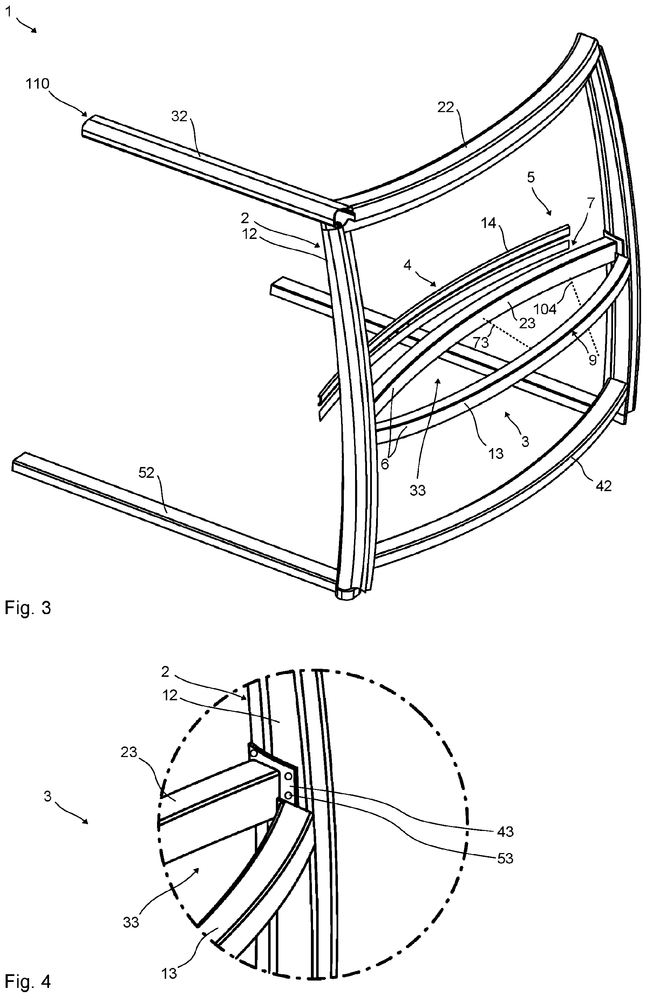

In der Figur 3 ist eine Rohbaustruktur 110 einer Fahrerkabine 10 gezeigt, wie sie beispielsweise in den Fahrzeugen 100 der Figuren 1 und 2 vorgesehen ist. Die Rohbaustruktur 110 umfasst hier zwei als A-Säulen 12 ausgebildete Hochträger 2. Zudem umfasst die Rohbaustruktur 110 zwei Basislängsträger 52 und zwei Dachlängsträger 32. Von den Dachlängsträgern 32 ist hier zur besseren Übersichtlichkeit nur derjenige der rechten Fahrzeugseite gezeigt. Weiterhin umfasst die Rohbaustruktur 110 hier einen Basisquerträger 42 und einen Dachquerträger 22, welche sich jeweils zwischen den beiden Hochträgern 2 erstrecken.

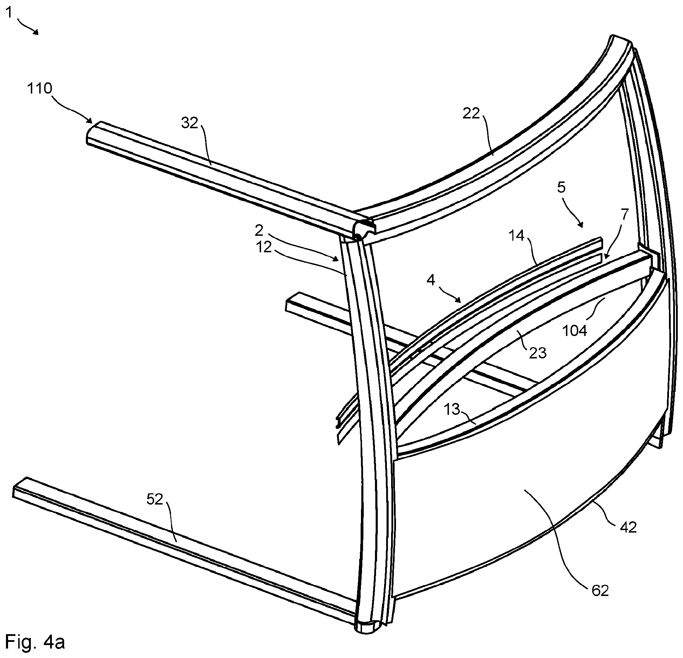

Die Rohbaustruktur 110 ist mit einer erfindungsgemäßen Kabinenteilstruktur 1 ausgestattet. Dazu erstreckt sich zwischen den beiden Hochträgern 2 eine Querträgereinheit 3. Ein vergrößerter Ausschnitt der Figur 3 zur Veranschaulichung der Anbindung der Querträgereinheit 3 an den Hochträger 2 der linken Fahrzeugseite ist in der Figur 4 gezeigt.

Die Querträgereinheit 3 ist hier etwas unterhalb einer Mitte zwischen den Dachquerträger 22 und dem Basisquerträger 42 angeordnet. Die Querträgereinheit 3 umfasst einen Frontträger 13 und einen Integralträger 23. Der Frontträger 13 ist in Vorwärtsfahrtrichtung gekrümmt bzw. konvex. Der Integralträger 23 ist entgegen der Fahrzeugvorwärtsfahrtrichtung bzw. konkav gekrümmt. Dadurch spannen der Frontträger 13 und der Integralträger 23 zwischen sich einen Trägerraum 23 auf.

Der Frontträger 13 und der Integralträger 23 sind hier mit dem gleichen Radius gekrümmt, sodass sich eine ellipsenähnliche Querschnittsgeometrie für den Trägerraum 33 ergibt. Dabei laufen Frontträger 13 und Integralträger 23 an ihren Enden hier derart aufeinander zu, dass sich eine linsenförmige Querschnittsgeometrie ergibt. Der Integralträger 23 ist hier abschnittsweise auf der gleichen Höhe wie der Frontträger 13 angeordnet.

Der Frontträger 13 ist hier fest in die Rohbaustruktur 110 integriert und beispielsweise mit den Hochträgern 2 verschweißt. Der Integralträger 23 ist hingegen lösbar an den Hochträgern 2 befestigt und beispielsweise an diesen verschraubt. Dadurch kann der Integralträger 23 besonders einfach in eine bereits bestehende Rohbaustruktur 110 eingebaut bzw. ausgebaut werden.

Der Frontträger 13 und der Integralträger 23 werden hier durch jeweils ein Hohlprofilbauteil 6 bereitgestellt. Dabei ist das Hohlprofilbauteil 6 des Integralträgers 23 an den Enden mit jeweils einer Flanscheinheit 43 ausgestattet (wie in der Figur 4 besonders gut zu erkennen). Zur Befestigung des Integralträgers 3 werden die Flanscheinheiten 43 dann mittels mehrerer Verschraubungsmittel 53 an den Hochträgern 2 verschraubt.

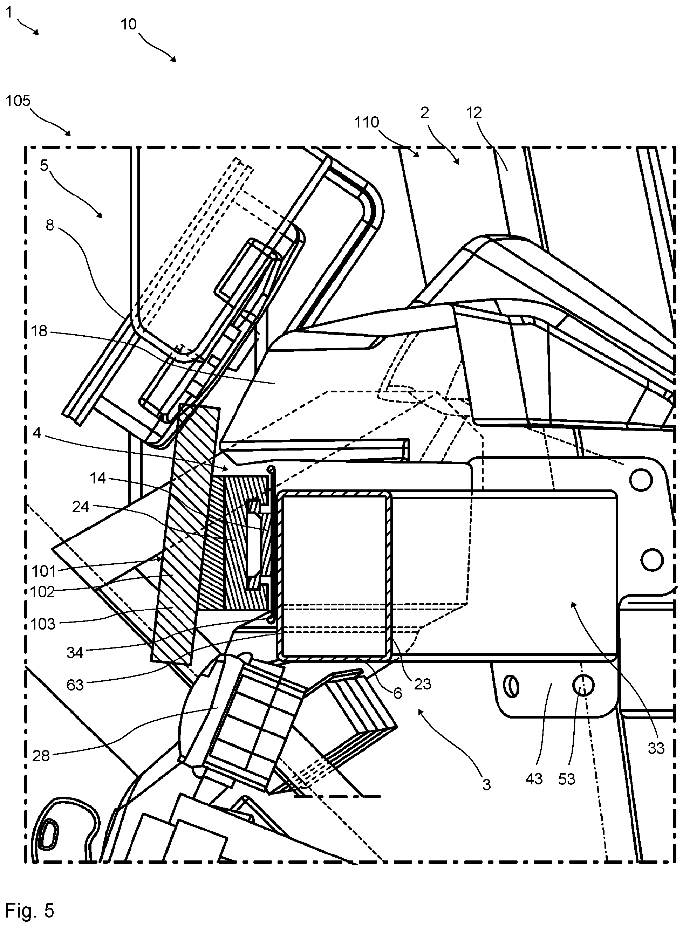

An dem Integralträger 23 sind hier zwei Aufnahmeschienen 14 einer Schieneneinrichtung 4 befestigt. Zur besseren Übersichtlichkeit sind die Aufnahmeschienen 14 hier in der Art einer Explosionsdarstellung eingezeichnet. An den Aufnahmeschienen 14 können die mit Bezug zu der Figur 5 vorgestellten Trägerschlitten 24 verschiebbar aufgenommen werden. Dabei folgen die Aufnahmeschienen 14 hier der Krümmung des Integralträgers 23.

In einer Ausgestaltung kann der Integralträger 23 mit einer hier nicht sichtbaren Anbindungseinrichtung 7 für eine hier stark schematisch skizzierte Lenksäule 104 ausgestattet sein..

Der Frontträger kann in einer Ausgestaltung mit einer hier nicht sichtbaren Scheibenrahmenstruktur 9 zur Befestigung einer Windschutzscheibe 106 ausgestattet sein.

Zur Vereinfachung der Montage bzw. Nachrüstung umfasst die Kabinenteilstruktur 1 hier ein vormontiertes Modul **5.** Das Modul 5 wird hier durch den Integralträger 23 und die daran befestigten Aufnahmeschienen 14 bereitgestellt. Das Modul 5 kann auch weitere an dem Integralträger 23 direkt oder mittelbar befestigte Komponenten umfassen, wie es beispielsweise nachfolgend beschrieben wird.

In der Figur 4b ist eine mit einer Schottwand 62 ausgestattete Weiterbildung der mit Bezug zu den beiden vorherigen Figuren beschriebenen Kabinenteilstruktur 1 gezeigt. Die Schottwand 62 ist hier an dem Frontträger 13 und an dem Basisquerträger 42 sowie an den Hochträgern 2 verschraubt. Dabei ist die Schottwand 62 korrespondierend zum Fronträger 13 gekrümmt und als eine Metallschaum-Verbundplatte und beispielsweise als Aluminiumschaum-Sandwichplatte ausgebildet. Dadurch ergeben sich eine besonders hohe Stabilität und Crashsicherheit und je nach Stärke der Schottwand 62 auch ein Schutz vor umherfliegenden Teilen bzw. Splittern.

Die Schottwand 62 erstreckt sich hier nur über einen unteren Abschnitt einer Frontseite des Frontträgers 13, sodass darüber die Windschutzscheibe 106 befestigt werden kann. Die Schottwand kann hier nicht gezeigte Erhebungen und/oder Ausnehmungen aufweisen, in bzw. durch welche sich Fahrzeugkomponenten erstrecken. Die Ausnehmungen sind vorzugsweise abgedeckt.

Die Figur 5 zeigt eine mit einer erfindungsgemäßen Karosserieteilstruktur 1 ausgestattete Fahrerkabine 10 in einer entlang der Fahrzeuglängsrichtung geschnittenen Ansicht. Dabei zeigt der dargestellte Ausschnitt ein Cockpit 105 der Fahrerkabine 10. Die Rohbaustruktur 110 und die Querträgereinheit 3 sind hier beispielsweise wie zuvor mit Bezug zu der Figur 3 beschrieben ausgebildet. Dabei ist der Frontträger 13 in dem hier gezeigten Ausschnitt nicht sichtbar.

Besonders gut ist hier die Schieneneinrichtung 4 zu erkennen, welche hier beispielhaft mit nur einer Aufnahmeschiene 14 ausgestattet ist. Die Aufnahmeschiene 14 ist hier direkt an dem Integralträger 23 montiert. An der Aufnahmeschiene 14 ist hier ein Trägerschlitten 24 aufgenommen, welcher in Längsrichtung der Aufnahmeschiene 14 verschoben werden kann. An dem Trägerschlitten 24 ist hier eine Benutzerschnittstelle 101 befestigt, welche beispielsweise eine Bedieneinrichtung 102 und/oder eine Anzeigeeinrichtung 103 umfasst.

Zwischen der Aufnahmeschiene 14 und dem Integralträger 23 ist hier eine Kontaktschiene 34 angeordnet. Über die Kontaktschiene 34 erfolgt hier sowohl eine Energieversorgung als auch eine Datenübertragung für die an der Schieneneinrichtung 4 aufgenommenen Benutzerschnittstellen 101. So kann die Benutzerschnittstelle 101 durch ein einfaches Einsetzen in die Aufnahmeschiene 24 unkompliziert und zügig an die Stromversorgung des Fahrzeugs 100 angeschlossen werden und zugleich mit dessen Steuergeräten kommunizieren.

Der Integralträger 23 dient hier zugleich auch als ein Cockpitkomponententräger 63. Dadurch können die hier gezeigten Cockpitkomponenten an dem Integralträger 23 montiert werden. So sind beispielsweise eine Instrumententafel 8 und eine Cockpitverkleidung 18 sowie mehrere Belüftungseinheiten 28 einer Klimaanlage an dem Integralträger 23 befestigt.

Der Integralträger 23 ist hier Teil eines vormontierten Moduls 5. Dabei sind die Komponenten, welche an dem Integralträger 23 in seiner Funktion als Cockpitkomponententräger 63 befestigt sind, bereits vormontiert. Bei der Fertigung der Fahrerkabine muss für das Cockpit 105 dann lediglich der Integralträger 23 an den Hochträgern 2 verschraubt werden. Anschließend oder zuvor erfolgt die entsprechende elektrische bzw. strömungstechnische Anbindung der Bauteile.

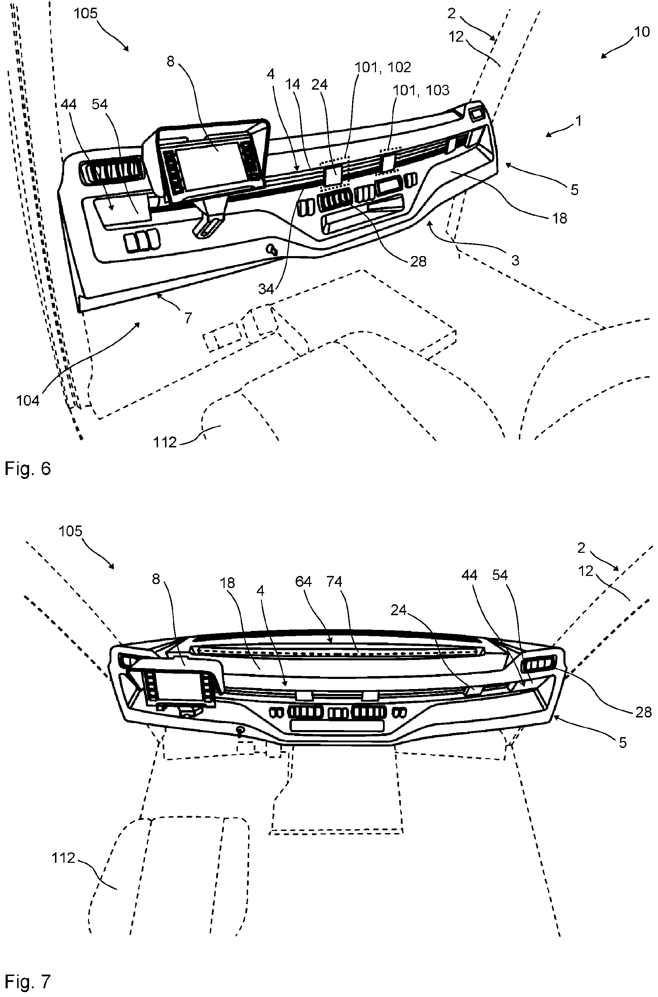

In den Figuren 6 und 7 ist eine Fahrerkabine 10 gezeigt, wie sie beispielsweise mit Bezug zu der Figur 5 beschrieben ist. Dabei sind hier diejenigen Bauteile, welche nicht als Modul 5 montiert werden, gestrichelt dargestellt. Zur Veranschaulichung einer Sitzposition des Fahrers ist hier ein Fahrersitz 112 eingezeichnet. Zur besseren Übersichtlichkeit sind das Lenkrad und die Lenksäule hier nicht eingezeichnet.

Besonders gut zu erkennen ist hier das Cockpit 105 mit der Instrumententafel 8 und der Cockpitverkleidung 18 sowie den Belüftungseinheiten 28. Ebenfalls gut zu erkennen ist hier die Schieneneinrichtung 4, welche hier beispielhaft mit drei Trägerschlitten 24 ausgestattet ist.

Die Schieneneinrichtung 4 ist hier mit zwei Wechselabschnitten 44 ausgestattet, in denen die Trägerschlitten 24 in die Aufnahmeschiene 14 eingesetzt bzw. aus dieser ausgelöst werden können. Die Wechselabschnitte 44 liegen hier nicht sichtbar unterhalb jeweils eines Verschlussbauteils 54. Durch das Verschlussbauteil 54 wird verhindert, dass die Trägerschlitten 24 unbeabsichtigt in den Wechselabschnitt 44 eingeschoben und ausgelöst werden. Bei Bedarf kann das Verschlussbauteil 54 hier einfach abgenommen werden.

Die Trägerschlitten 24 können mit hier nur schematisch angedeuteten Benutzerschnittstellen 101 ausgestattet werden. Beispielsweise kann einer der Trägerschlitten 24 eine Bedieneinrichtung 102 und an einem anderen Trägerschlitten 24 eine Anzeigeeinrichtung 103 und z. B. ein Display befestigt werden. Der dritte Trägerschlitten 24 steht z. B. zum Nachrüsten weiterer Benutzerschnittstellen 101 bereit.

An dem Integralträger 23 ist hier eine Zusatzschieneneinrichtung 64 mit einer Zusatzaufnahmeschiene 74 befestigt. Daran können weitere hier nicht näher dargestellte Benutzerschnittstellen 101 verschiebbar befestigt werden. Auch die Zusatzschieneneinrichtung 64 ist hier Teil des vormontierten Moduls 5.

Die hier vorgestellte Erfindung bietet eine besonders gut im Leichtbau umsetzbare Fahrerkabine 10 mit hohen Steifigkeiten und hoher Crash-Sicherheit. Zugleich wird durch die an dem Integralträger 23 befestigte Schieneneinrichtung 4 eine besonders hohe Variabilität erreicht. Beispielsweise kann das Cockpit 105 durch die doppelspurige Aufnahmeschiene 14 und den darauf verschiebbaren Trägerschlitten 24 an diverse FunktionsAnforderungen einfach angepasst werden. So sind branchen-und kundenspezifische Cockpitkomponenten, Instrumentierungen, Cockpitgeräte und Cockpitboxen einfach und zügig auf den Trägerschlitten 24 zu montieren. Durch die stufenlose Positionierung der Funktionsgeräte auf der z. B. kreisbogenförmigen Aufnahmeschiene 14 sind beste ergonomische Stellungen erreichbar. So können eine Vielzahl von Geräten und Komponenten im Cockpitbereich für Fahrer und Begleiter gezielt positioniert werden. Auch für die Herstellung ergeben sich wirtschaftliche Vorteile, da eine spezifische Bestückung des Cockpits 105 erheblich vereinfacht wird. Dadurch ist das Cockpit 105 auch besonders zukunftssicher und nachhaltig.

### Bezugszeichenliste:

| | | | |
|---|---|---|---|
| 1 | Kabinenteilstruktur | 105 | Cockpit |
| 2 | Hochträger | 106 | Windschutzscheibe |
| 3 | Querträgereinheit | 107 | Fahrgestell |
| 4 | Schieneneinrichtung | 108 | Rad |
| 5 | Modul | 109 | Tür |
| 6 | Hohlprofilbauteil | 110 | Rohbaustruktur |
| 7 | Anbindungseinrichtung | 111 | Dach |
| 8 | Instrumententafel | 112 | Sitz |
| 9 | Scheibenrahmenstruktur | 120 | Nutzfahrzeug |
| 10 | Fahrerkabine | | |
| 12 | A-Säule | | |
| 13 | Frontträger | | |
| 14 | Aufnahmeschiene | | |
| 18 | Cockpitverkleidung | | |
| 22 | Dachquerträger | | |
| 23 | Integralträger | | |
| 24 | Trägerschlitten | | |
| 28 | Belüftungsöffnung | | |
| 32 | Dachlängsträger | | |
| 33 | Trägerraum | | |
| 34 | Kontaktschiene | | |
| 42 | Basisquerträger | | |
| 43 | Flanscheinheit | | |
| 44 | Wechselabschnitt | | |
| 52 | Basislängsträger | | |
| 53 | Verschraubungsmittel | | |
| 54 | Verschlussbauteil | | |
| 62 | Schottwand | | |
| 63 | Cockpitkomponententräger | | |
| 64 | Zusatzschieneneinrichtung | | |
| 73 | Versteifungselement | | |
| 74 | Zusatzaufnahmeschiene | | |
| 100 | Kraftfahrzeug | | |
| 101 | Benutzerschnittstelle | | |
| 102 | Bedieneinrichtung | | |
| 103 | Anzeigeeinrichtung | | |
| 104 | Lenksäule | | |

## Patentansprüche

1. Kabinenteilstruktur (1) für eine Fahrerkabine (10) eines Kraftfahrzeugs (100) und vorzugsweise eines Nutzfahrzeugs (120), umfassend wenigstens zwei sich in Fahrzeughochrichtung erstreckende Hochträger (2) und wenigstens eine sich in Fahrzeugquerrichtung erstreckende und mit den Hochträgern (2) verbundene Querträgereinheit (3), wobei die Querträgereinheit (3) beabstandet zu den oberen und unteren Enden der Hochträger (2) angeordnet ist, wobei die Querträgereinheit (3) wenigstens einen in Fahrzeugvorwärtsfahrtrichtung gekrümmten (nämlich konvexen) Frontträger (13) und wenigstens einen entgegen der Fahrzeugvorwärtsfahrtrichtung gekrümmten (nämlich konkaven) Integralträger (23) umfasst, sodass der Frontträger (13) und der Integralträger (23) zwischen sich einen Trägerraum (33) aufspannen,
**dadurch gekennzeichnet,**
**dass** der Frontträger (13) und der Integralträger (23) über wenigstens die Hälfte ihrer Spannweite mit einem gleichen Radius gekrümmt sind, sodass der aufgespannte Trägerraum (33) eine ellipsenähnliche Querschnittsgeometrie aufweist.

2. Kabinenteilstruktur (1) nach dem vorhergehenden Anspruch, wobei die Querträgereinheit (3) wenigstens eine Schieneneinrichtung (4) zur beweglichen Aufnahme von wenigstens einer Benutzerschnittstelle (101), insbesondere Bedieneinrichtungen (102) und/oder Anzeigeeinrichtungen (103), in der Fahrerkabine (10) umfasst und wobei die Schieneneinrichtung (4) wenigstens eine sich in Fahrzeugquerrichtung erstreckende und an dem Integralträger (23) befestigte Aufnahmeschiene (14) zur Aufnahme von Trägerschlitten (24) umfasst.

3. Kabinenteilstruktur (1) nach dem vorhergehenden Anspruch, wobei die wenigstens eine Aufnahmeschiene (14) der Krümmung des Integralträgers (23) folgt.

4. Kabinenteilstruktur (1) nach einem der beiden vorhergehenden Ansprüche, wobei die Schieneneinrichtung (4) wenigstens eine Kontaktschiene (34) umfasst, mittels welcher eine aufgenommene Benutzerschnittstelle (101) elektrisch kontaktierbar ist.

5. Kabinenteilstruktur (1) nach einem der drei vorhergehenden Ansprüche, wobei die Schieneneinrichtung (4) wenigstens einen Wechselabschnitt (44) aufweist, innerhalb welchem der Trägerschlitten (24) in die Aufnahmeschiene (14) einsetzbar und/oder aus der Aufnahmeschiene (14) auslösbar ist, und wobei der Wechselabschnitt (44) vorzugsweise an wenigstens einem Endbereich der Aufnahmeschiene (14) liegt.

6. Kabinenteilstruktur (1) nach dem vorhergehenden Anspruch, wobei der wenigstens eine Wechselabschnitt (44) mittels eines Verschlussbauteils (54) abdeckbar ist, sodass ein unbeabsichtigtes Einschieben des Trägerschlittens (24) in den Wechselabschnitt (44) blockier ist.

7. Kabinenteilstruktur (1) nach einem der vorhergehenden Ansprüche, umfassend wenigstens eine Zusatzschieneneinrichtung (64) mit wenigstens einer sich in Fahrzeugquerrichtung erstreckenden und wenigstens teilweise oberhalb des Trägerraums (33) angeordnete Zusatzaufnahmeschiene (74) zur Aufnahme von Trägerschlitten (24) umfasst.

8. Kabinenteilstruktur (1) nach einem der vorhergehenden Ansprüche, wobei der Integralträger (23) lösbar mit den Hochträgern (2) und/oder mit dem Frontträger (13) verbunden und vorzugsweise verschraubt ist.

9. Kabinenteilstruktur (1) nach einem der vorhergehenden Ansprüche, umfassend wenigstens ein vormontierbares Modul (5), welches in eine bereits bestehende Rohbaustruktur (110) der Fahrerkabine (10) montierbar ist, wobei das Modul (5) wenigstens den Integralträger (23) und eine Schieneneinrichtung (4) umfasst, sodass zur Befestigung der Schieneneinrichtung (4) an der Rohbaustruktur (110) der Integralträger (23) mit der Rohbaustruktur (110) verbunden werden muss.

10. Kabinenteilstruktur (1) nach einem der vorhergehenden Ansprüche, wobei sich zwischen dem Frontträger (13) und dem Integralträger (23) wenigstens ein Versteifungselement (73) erstreckt.

11. Kabinenteilstruktur (1) nach einem der vorhergehenden Ansprüche, wobei der Integralträger (23) und der Frontträger (13) durch jeweils ein Hohlprofilbauteil (6) bereitgestellt werden oder ein solches umfassen.

12. Kabinenteilstruktur (1) nach einem der vorhergehenden Ansprüche, wobei der Integralträger (23) wenigstens eine Anbindungseinrichtung (7) für eine Lenksäule (104) aufweist und wobei der Integralträger (23) vorzugsweise wenigstens zwei Anbindungseinrichtungen (7) aufweist, umfassend eine Anbindungseinrichtung (7) für eine Ausführung des Fahrzeugs als Linkslenker und eine weitere Anbindungseinrichtung (7) für eine Ausführung des Fahrzeugs als Rechtslenker.

13. Kabinenteilstruktur (1) nach einem der vorhergehenden Ansprüche, wobei der Integralträger (23) wenigstens einen Cockpitkomponententräger (63) bereitstellt und wobei dazu an dem Integralträger (23) wenigstens eine Instrumententafel (8) für ein Cockpit (105) der Fahrerkabine (10) und/oder wenigstens eine Cockpitverkleidung und/oder wenigstens eine Belüftungsöffnung für eine Klimatisierungsanlage befestigbar ist.

14. Kabinenteilstruktur (1) nach einem der vorhergehenden Ansprüche, wobei der Frontträger (13) wenigstens eine Scheibenrahmenstruktur (9) zur Montage einer Windschutzscheibe (106) aufweist.

15. Kraftfahrzeug (100), insbesondere Nutzfahrzeug (110), mit wenigstens einer Fahrerkabine (10), umfassend eine Kabinenteilstruktur (1) nach einem der vorhergehenden Ansprüche.

## Claims

1. A cab substructure (1) for a driver's cab (10) of a motor vehicle (100) and preferentially of a commercial vehicle (120), including at least two vertical supports (2) extending in the vehicle vertical direction, and at least one cross-member unit (3) extending in the vehicle transverse direction and connected to the vertical supports (2), wherein the cross-member unit (3) is arranged spaced apart from the upper and lower ends of the vertical supports (2), wherein the cross-member unit (3) includes at least one front beam (13) curved in the vehicle forward driving direction (namely convexly) and at least one integral beam (23) curved opposite to the vehicle forward driving direction (namely concavely), so that the front beam (13) and the integral beam (23) between them define a beam space (33),
**characterised**
**in that** the front beam (13) and the integral beam (23) are curved with a same radius over at least half of their span, so that the defined beam space (33) has an ellipsoidal cross-sectional geometry.

2. The cab substructure (1) according to the preceding claim, wherein the cross-member unit (3) includes at least one rail device (4) for the moveable receiving of at least one user interface (101), in particular, operating devices (102) and/or display devices (103), in the driver's cab (10) and wherein the rail device (4) includes at least one mounting rail (14) extending in the vehicle transverse direction and attached to the integral beam (23) for receiving beam slides (24).

3. The cab substructure (1) according to the preceding claim, wherein the at least one mounting rail (14) follows the curvature of the integral beam (23).

4. The cab substructure (1) according to any one of the two preceding claims, wherein the rail device (4) includes at least one contact rail (34), by means of which a mounted user interface (101) is electrically contactable.

5. The cab substructure (1) according to any one of the three preceding claims, wherein the rail device (4) comprises at least one changing portion (44), within which the beam slide (24) can be inserted into the mounting rail (14) and/or can be released from the mounting rail (14), and wherein the changing portion (44) preferentially is situated on at least one end region of the mounting rail (14).

6. The cab substructure (1) according to the preceding claim, wherein the at least one changing portion (44) can be covered by means of a closure component (54), so that an inadvertent sliding-in of the beam slide (24) into the changing portion (44) is blocked.

7. The cab substructure (1) according to any one of the preceding claims, including at least one additional rail device (64) with at least one additional mounting rail (74) extending in the vehicle transverse direction and arranged at least partially above the beam space (33) for receiving beam slides (24).

8. The cab substructure (1) according to any one of the preceding claims, wherein the integral beam (23) is detachably connected to the vertical supports (2) and/or to the front beam (13) and preferentially screwed.

9. The cab substructure (1) according to any one of the preceding claims, including at least one pre-assemblable module (5), which can be mounted into an already existing body structure (110) of the driver's cab (10), wherein the module (5) includes at least the integral beam (23) and a rail device (4), so that for attaching the rail device (4) to the body structure (110) the integral beam (23) has to be connected to the body structure (110).

10. The cab substructure (1) according to any one of the preceding claims, where in between the front beam (13) and the integral beam (23) at least one stiffening element (73) extends.

11. The cab substructure (1) according to any one of the preceding claims, wherein the integral beam (23) and the front beam (13) are provided by a hollow section component (6) each, and/or include such.

12. The cab substructure (1) according to any one of the preceding claims, wherein the integral beam (23) comprises at least one connecting device (7) for a steering column (104) and wherein the integral beam (23) preferentially comprises at least two connecting devices (7), including a connecting device (7) for embodying the vehicle as lefthand drive vehicle and a further connecting device (7) for embodying the vehicle as right-hand drive vehicle.

13. The cab substructure (1) according to any one of the preceding claims, wherein the integral beam (23) provides at least one cockpit component carrier (63) and wherein for this purpose at least one instrument panel (8) for a cockpit (105) of the driver's cab (10) and/or at least one cockpit covering and/or at least one ventilation opening for an air-conditioning system can be attached to the integral beam (23) for this purpose.

14. The cab substructure (1) according to any one of the preceding claims, wherein the front beam (13) comprises at least one windscreen frame structure (9) for mounting a windscreen (106).

15. A motor vehicle (100), in particular, commercial vehicle (110), having at least one driver's cab (10), including a cab substructure (1) according to any one of the preceding claims.

## Revendications

1. Structure de section de cabine (1) pour une cabine de conduite (10) d'un véhicule automobile (100), de préférence d'un véhicule utilitaire (120), comprenant au moins deux montants (2) s'étendant dans la direction verticale du véhicule et au moins une unité de unité de traverse (3) s'étendant dans la direction verticale du véhicule et reliée aux montants (2), dans laquelle l'unité de unité de traverse (3) est disposée à une certaine distance des extrémités supérieure et inférieure des montants (2), dans laquelle l'unité de unité de traverse (3) comprend au moins un support avant (13) incurvé (c'est-à-dire convexe) dans la direction de déplacement du véhicule et au moins un support monobloc (23) incurvé (c'est-à-dire concave) dans la direction de déplacement inverse du véhicule, de sorte que le support avant (13) et le support monobloc (23) enjambent un espace porteur (33), **caractérisée en ce que** le support avant (13) et le support monobloc (23) sont incurvés sur au moins la moitié de leur portée avec un rayon identique, de sorte que l'espace porteur enjambé (33) présente une géométrie de section transversale elliptique.

2. Structure de section de cabine (1) selon la revendication précédente, dans laquelle l'unité de traverse (3) comprend au moins un ensemble de rails (4) destiné à recevoir de manière mobile au moins une interface d'utilisateur (101), notamment des dispositifs de commande (102) et/ou des dispositifs d'affichage (103), dans la cabine du conducteur (10), et dans laquelle l'ensemble de rails (4) comprend au moins un rail de réception (14) s'étendant dans la direction transversale du véhicule et fixé au support monobloc (23) destiné à recevoir des chariots de support (24).

3. Structure de section de cabine (1) selon la revendication précédente, dans laquelle le au moins un rail de réception (14) sui la courbure du support monobloc (23).

4. Structure de section de cabine (1) selon une des deux revendications précédentes, dans laquelle l'ensemble de rails (4) comprend au moins un rail de contact (34) permettant la mise en contact électrique d'une interface d'utilisateur (101) montée sur le rail.

5. Structure de section de cabine (1) selon une des trois revendications précédentes, dans laquelle l'ensemble de rails (4) présente au moins une section interchangeable (44), à l'intérieur de laquelle le chariot de support (24) peut être inséré et/ou retiré du rail de réception (14) et dans laquelle le section interchangeable (44) est de préférence située à au moins une extrémité du rail de réception (14).

6. Structure de section de cabine (1) selon la revendication précédente, dans laquelle la au moins une section interchangeable (44) peut être recouverte par un élément de fermeture (54) afin d'empêcher toute insertion accidentelle du chariot de support (24) dans la section interchangeable (44).

7. Structure de section de cabine (1) selon une des revendications précédentes, comprenant au moins un ensemble de rails supplémentaire (64) avec au moins un rail de montage supplémentaire (74) s'étendant transversalement à la direction du véhicule et disposé au moins partiellement au-dessus de l'espace de support (33) destiné à recevoir les chariots de support (24).

8. Structure de section de cabine (1) selon une des revendications précédentes, dans laquelle le support monobloc (23) est fixé de manière amovible aux montants (2) et/ou au support avant (13) et de préférence vissé.

9. Structure de section de cabine (1) selon une des revendications précédentes, comprenant au moins un module pré-assemblable (5) pouvant être monté dans une structure de carrosserie autoporteuse (110) de la cabine du conducteur (10), dans lequel le module (5) comprend au moins le support monobloc (23) et un ensemble de rails (4), de sorte que le support monobloc (23) doive être fixé à la structure de carrosserie autoporteuse (110) pour la fixation de l'ensemble de rails (4).

10. Structure de section de cabine (1) selon une des revendications précédentes, dans laquelle au moins un élément de raidissement (73) s'étend entre le support avant (13) et le support monobloc (23).

11. Structure de section de cabine (1) selon une des revendications précédentes, dans laquelle le support monobloc (23) et le support avant (13) sont respectivement constitués d'un profilé creux (6) ou comprennent un tel profilé.

12. Structure de section de cabine (1) selon une des revendications précédentes, dans laquelle le support monobloc (23) présente au moins un dispositif de fixation (7) pour une colonne de direction (104) et dans laquelle le support monobloc (23) présente de préférence au moins deux dispositifs de fixation (7), comprenant un dispositif de fixation (7) pour une version à conduite à gauche et un autre dispositif de fixation (7) pour une version à conduite à droite.

13. Structure de section de cabine (1) selon une des revendications précédentes, dans laquelle le support monobloc (23) présente au moins un porte-composant de poste de pilotage (63) et dans lequel au moins un tableau de bord (8) pour un poste de conduite (105) de la cabine du conducteur (10) et/ou au moins un panneau de garniture de poste de conduite et/ou au moins une ouverture de ventilation pour un système de climatisation peuvent être fixés au support monobloc (23).

14. Structure de section de cabine (1) selon une des revendications précédentes, dans laquelle le support avant (13) présente au moins une structure de cadre de pare-brise (9) pour le montage d'un pare-brise (106).

15. Véhicule automobile (100), notamment un véhicule utilitaire (110), comportant au moins une cabine du conducteur (10), comprenant une structure de section de cabine (1) selon une des revendications précédentes.
